## Europäisches Patentamt

## European Patent Office

## Office européen des brevets

(11) Veröffentlichungsnummer: **0 014 408**
**B1**

(12)

# EUROPÄISCHE PATENTSCHRIFT

(45) Veröffentlichungstag der Patentschrift:
**10.02.82**

(51) Int. Cl.³: **C 09 C 1/34**, C 01 B 33/32

(21) Anmeldenummer: **80100426.8**

(22) Anmeldetag: **28.01.80**

(54) Verfahren zur Herstellung von Kosmochlorpigmenten (Natrium-Chrom-Doppelsilikat) sowie deren Verwendung.

(30) Priorität: **08.02.79 DE 2904828**

(43) Veröffentlichungstag der Anmeldung:
**20.08.80 Patentblatt 80/17**

(45) Bekanntmachung des Hinweises auf die Patenterteilung:
**10.02.82 Patentblatt 82/6**

(84) Benannte Vertragsstaaten:
**AT BE DE FR GB IT NL SE**

(56) Entgegenhaltungen:
CHEMICAL ABSTRACTS, Band 81, Nr. 20,
18. November 1974, Seite 207,
Nr. 123807y
Columbus, Ohio, U.S.A.

CHEMICAL ABSTRACTS, Band 81, Nr. 26,
30. Dezember 1974, Seite 168,
Nr. 172265d
Columbus, Ohio, U.S.A.
T.A. UST'YANTSEVA et al.: "Preparation of sodium chromium silicate"

CHEMICAL ABSTRACTS, Band 82, Nr. 4,
27. Januar 1975, Seite 117,
Nr. 18686f
Columbus, Ohio, U.S.A.

(73) Patentinhaber: **BAYER AG, Zentralbereich Patente,
Marken und Lizenzen, D-5090 Leverkusen 1, Bayerwerk
(DE)**

(72) Erfinder: **Hund, Franz, Dr., Scheiblerstrasse 89,
D-4150 Krefeld (DE)**

(56) Entgegenhaltungen:
B.P. SEREDA et al.: "Technology of
green chromium pigments based on
sodium chromium silicate
$(NaCrSi_2O_6)$"

CHEMICAL ABSTRACTS, Band 83, Nr. 20,
17. November 1975, Seite 540,
Nr. 171897r
Columbus, Ohio, U.S.A.
T.A. UST'YANTSEVA et al.: "Synthesis of sodium
chromium silicate
$(NaCrSi_2O_6)$"

CHEMICAL ABSTRACTS, Band 91, Nr. 22,
26. November 1979, Seite 119,
Nr. 177453e
Columbus, Ohio, U.S.A.

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

Verfahren zur Herstellung von Kosmochlorpigmenten (Natrium-Chrom-Doppelsilikat) sowie deren Verwendung

Ungemischte, anorganische, oxidische Grünpigmente einheitlicher Kristallstruktur, die Chrom(III)-ionen allein oder zusammen mit farblosen oder farbgebenden Ionen im Gitter enthalten, sind im wesentlichen Chrom(III)-oxidpigmente mit Korundstruktur, Chrom(III)-oxidhydroxidpigmente mit Böhmitstruktur, Calciumchrom(III)-silikatpigmente mit Granatstruktur und Kobalt-Nickel-Zink-Aluminium-Titan-Chromoxidpigmente mit inverser Spinellstruktur. Besitzen solche anorganischen Grünpigmente eine schöne, leuchtende Farbe, so enthalten sie einen beträchtlichen Kobaltanteil, stehen daher sehr hoch ein oder haben im Vergleich, z.B. mit den leuchtend grünen, mehrphasigen Mischpigmenten von gelbem Bleichromat(VI) – mit Phthalocyanin- oder Berliner-Blau-Pigmenten einen für viele Anwendungsgebiete unerwünschten stumpfen und ungesättigten Farbton.

Die erwähnten grünen, mehrphasigen Mischpigmente, die anorganische und organische Komponenten enthalten, entmischen sich aufgrund der grossen Unterschiede im spezifischen Gewicht bei der Anwendung in flüssigen Dispersionsmedien sehr leicht und sind wegen ihres Blei- und Chromat(VI)-Gehaltes nur unter besonderen Schutzmassnahmen herzustellen und anzuwenden. Es besteht daher ein erhebliches Interesse an leuchtend grünen, ungemischten, einphasigen, rein anorganischen, oxidischen Grünpigmenten einheitlicher Kristallstruktur, die in einfacher Weise wirtschaftlich herstellbar sind.

Ein smaragdgrünes, als farbgebenden Bestandteil nur Chrom(III)-ionen enthaltendes Oxid wurde in dem grünen Bestandteil von Meteoriten gefunden. Dieses Mineral, $NaCrSi_2O_6$, wurde aufgrund seiner Herkunft und Farbe «Kosmochlor» genannt.

Es ist bekannt, Frondel u. Klein, Science, Vol. 149, Seiten 742–744 (1965), Kosmochlor synthetisch einerseits durch Schmelzen einer bezogen auf die Formel $NaCrSi_2O_6$ nichtstöchiometrischen Mischung einzelner Komponenten in einzelnen Kristallen und andererseits unter 10 kbar Druck bei 600°C herzustellen. Die Herstellung von Kosmochlor durch Schmelzen einer der stöchiometrischen Zusammensetzung $NaCrSi_2O_6$ entsprechenden Mischung einzelner Komponenten ist nach Frondel u. Klein (a.a.O.) nicht möglich.

Erfindungsgemäss wurde nun überraschenderweise gefunden, dass es doch möglich ist, Kosmochlor als Pigment ohne Anwendung einer Schmelze und eines zusätzlichen Druckes herzustellen.

Gegenstand der vorliegenden Erfindung ist daher ein Verfahren zur Herstellung von Kosmochlorpigmenten der Zusammensetzung $NaCrSi_2O_6$, welches dadurch gekennzeichnet ist, dass man bezogen auf die Formel $NaCrSi_2O_6$ stöchiometrische bis nahezu stöchiometrische Mengen solcher Komponenten, die in ihrer Zusammensetzung, gegebenenfalls auch erst beim Erhitzen auf Reaktionstemperatur, die Bruttozusammensetzung $NaCrSi_2O_6$ ergeben, gegebenenfalls unter Zusatz von Mineralisatoren vermengt und mindestens 2 mal auf eine Reaktionstemperatur zwischen 850 und 1150°C mit einer intermediären Zerkleinerung aufheizt.

Unter nahezu stöchiometrischen Mengen der Komponenten werden ± 10 Gew.-%, vorzugsweise ± 5 Gew.-%, bezogen auf den berechneten $Cr_2O_3$-Gehalt von Kosmochlor von 33,46% verstanden. Besonders bevorzugt wird das erfindungsgemässe Verfahren jedoch mit stöchiometrischen Mengen solcher Komponenten, die in ihrer Zusammensetzung, gegebenenfalls auch erst beim Erhitzen auf Reaktionstemperatur, die Bruttozusammensetzung $NaCrSi_2O_6$ ergeben, durchgeführt.

Gegebenenfalls können einer solchen Ausgangsmischung kleine Mengen an Mineralisatoren, z.B. Alkalihalogenide oder Alkaliborate zugesetzt werden. Als einzelne Komponenten werden z.B. Natriumhydroxid, Natriumcarbonat, Natriumnitrat, Natriumnitrit, Natriumformiat, Natriumacetat, Natriumoxalat, Natriumcarboxylate, bevorzugt Natriumchromat (VI), Natriumdichromat (VI), Natriumsilikate und Kieselsäuren, auch Wasserglas mit spezifischen Oberflächen von etwa 0,01 bis etwa 1000 m²/g, Quarzsand, Ammoniumchromat(VI), Ammoniumdichromat(VI), Chromsäure, Chrom(III)-oxid, Chrom(IV)-oxid und oxidische Zwischenprodukte, in denen das Chrom eine Oxidationszahl zwischen 4 und 6 besitzt, Chrom(III)-oxidhydroxide und amorphe bis kristalline Chrom(III)-hydroxide bzw. Oxidaquate eingesetzt. Unter den genannten Verbindungen sind einzelne, die die gewünschten Bestandteile erst beim Erhitzen bzw. bei Reaktionstemperatur ergeben.

Erfindungsgemäss ist es notwendig, dass der Glühvorgang bei Reaktionstemperatur mindestens 2 mal vorgenommen wird, damit das gewünschte smaragdgrüne Pigment $NaCrSi_2O_6$ in homogener Form ohne Anteile an wasserlöslichem Chromat(VI) vorliegt.

Die Reaktionstemperatur, die zwischen 850 bis 1150°C, vorzugsweise zwischen 900 bis 1100°C liegt, ist in Abstimmung mit der Reaktionsdauer zumindest der zweiten und gegebenenfalls den weiteren Glühungen so zu wählen, dass die Teilchengrösse des Produktes nach der Glühung im Mikronbereich liegt. Die einzuhaltende Reaktionsdauer richtet sich nach den eingesetzten Komponenten, der Reaktionstemperatur und der Häufigkeit der Glühungen. Erfindungsgemäss werden die Ausgangskomponenten jedoch so lange geglüht, bis das entstandene Produkt Chrom(VI) frei ist und Kosmochlorstruktur aufweist. Dies ist bei einer zweimaligen Glühung bei einer gesamten Reaktionsdauer von ca. 1,5 Stunden zum ausreichenden Teil der Fall.

Vorzugsweise wird jedoch bei jeder Glühung eine Zeit von mindestens 45–90 Minuten eingehalten. Auch längere Reaktionsdauern bis insgesamt z.B. 10 Stunden sind unschädlich für die Kosmochlorstruktur und können eingestellt werden.

Vorzugsweise wird zur Herstellung der erfindungsgemässen Kosmochlorpigmente ein Gemisch von – bezogen auf die Formel $NaCrSi_2O_6$ – stöchiometrischen Mengen an $SiO_2$ und Natriumdichromat, das sowohl mit als auch ohne Kristallwasser eingesetzt werden kann, verwendet. Als siliciumhaltige Komponente werden vorzugsweise stark gittergestörte amorphe oder kristalline Kieselsäuren mit einer spezifischen Oberfläche nach BET von 0,01 bis 1000 m²/g eingesetzt.

Des weiteren wird glasig amorphes und kristallines Natriumsilikat bevorzugt verwendet.

Die vorstehend beschriebenen Ausgangs-Kompcnenten in stöchiometrischen Mengen werden nach einer innigen Vermengung bei den vorstehend genannten Reaktionstemperaturen und Reaktionsdauern mindestens 2 mal mit einer intermediären Zerkleinerung aufgeheizt und das erhaltene Produkt anschliessend fein gemahlen.

Gegenstand der vorliegenden Erfindung ist ferner die Verwendung der erfindungsgemäss hergestellten Kosmochlorverbindung als Pigment, insbesondere zur Einfärbung transparenter oder deckender, auch mit anderen anorganischen oder organischen Pigmenten oder Farb- oder Füllstoffen gefärbter anorganischer, organischer Bindemittel, Kunststoffe oder von Glasuren für Email und Keramik.

Die erfindungsgemäss hergestellten Kosmochlorpigmente zeichnen sich gegenüber handelsüblichen grünen, relativ stumpf und ungesättigt aussehenden Eskolait- und Uwarowit-Pigmenten durch einen leuchtend smaragdgrünen Farbton mit hoher Farbsättigung aus. Sie sind daher als einphasiges, unvermischtes Chrom(III)-oxidpigment zur transparenten oder deckenden Einfärbung anorganischer und organischer Bindemittel, Kunststoffe und/oder Emailschichten sowie Glasuren besonders gut geeignet.

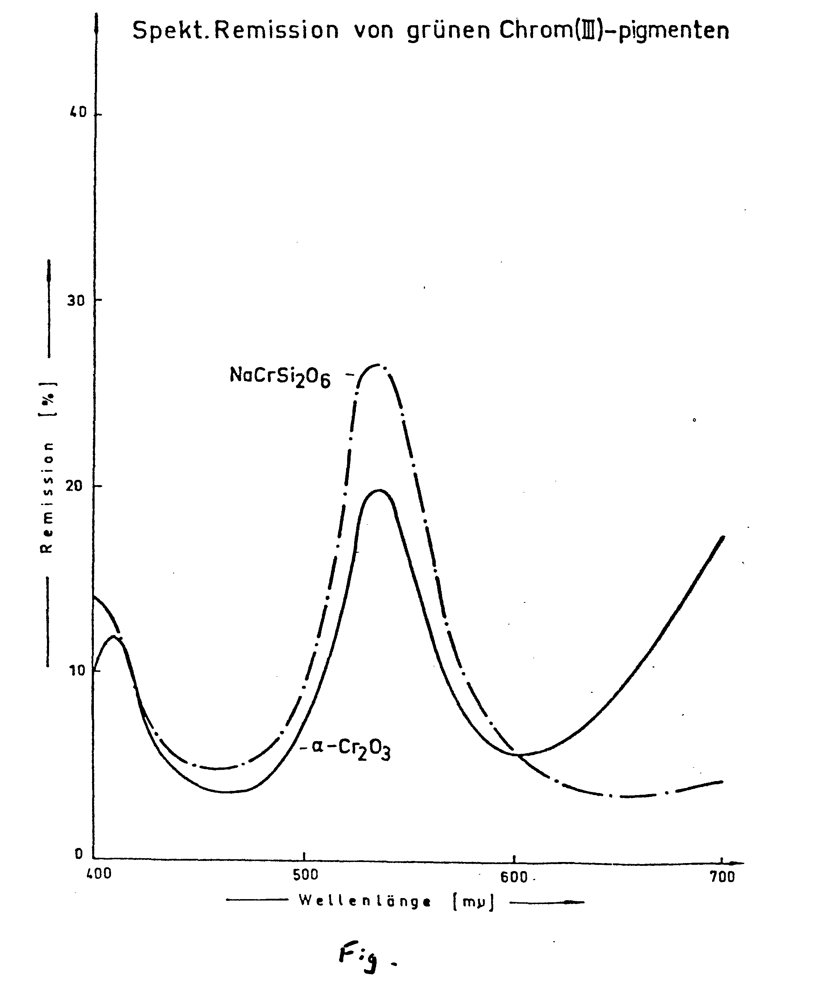

In der Figur ist die spektrale Remission eines handelsüblichen $\alpha$-$Cr_2O_6$-Grünpigmentes zusammen mit der eines nach dem erfindungsgemässen Verfahren hergestellten Kosmochlorpigmentes der Formel $NaCrSi_2O_6$ abgebildet. Das Kosmochlorpigment weist eine erhöhte Remission im mittleren grünen Spektralbereich auf. Eine Remission im langwelligen roten Bereich tritt gegenüber der des $\alpha$-$Cr_2O_6$ nur in untergeordnetem Masse auf, worauf der besonders erwünschte smaragdgrüne Farbton des Kosmochlorpigments mit der hohen Farbsättigung beruht.

Die nach dem vorliegenden Verfahren erhältlichen smaragdgrünen Pigmente von Kosmochlorstruktur können in üblicher Weise einer Nass-, Trocken- oder Dampfstrahlmahlung unterworfen werden, sie können zur Verbesserung der Dispergierbarkeit mit anorganischen oder organischen Mahlhilfs- oder Dispergierhilfsmitteln umgeben oder versetzt werden.

Das vorliegende Verfahren soll nun anhand der folgenden Beispiele noch näher beschrieben werden:

Beispiele

Für jeweils 30 g der gewünschten Verbindung $NaCrSi_2O_6$ wurden die in der Tabelle angegebenen Einzelbestandteile oder Verbindungen nach entsprechenden Analysen in einer Achat-Kugelmühle intensiv gemahlen. Die gemahlene Mischung wurde in einer Platinschale bei den in den einzelnen Beispielen angegebenen Temperaturen an der Luft geglüht, abgekühlt, intensiv gemahlen und anschliessend in der Platinschale bei der angegebenen, zumeist höheren Temperatur geglüht, abgekühlt und wieder gemahlen. Dieser Vorgang wurde gegebenenfalls noch 1 bis 2 mal bis zur angegebenen Endtemperatur wiederholt, wobei jeweils nach jeder Mahlung ein Teil der Probe auf Chromat(VI)-freiheit geprüft wurde. Alle Proben wurden so lange bei gleicher oder steigender Temperatur weiter geglüht, bis Chromat(VI)-freiheit und reines Kosmochlorgitter vorlag. Sämtliche Pigmente besassen eine leuchtend smaragdgrüne Farbe, und die Remissionswerte lagen auf der in der Figur angegebenen Kurve.

Tabelle
Darstellungsbedingungen von Kosmochlorpigmenten

| Beispiel Nr. | $Na_2O$-Bestandteil eingesetzt als | $Cr_2O_3$-Bestandteil eingesetzt als | spez. Oberfl. m²/g | $SiO_2$-Bestandteil eingesetzt als | spez. Oberfl. m²/g | Glühbedingungen in [°C] | | | |
|---|---|---|---|---|---|---|---|---|---|
| 1 | $Na_2Cr_2O_7 \cdot 2H_2O$ | $Na_2Cr_2O_7 \cdot 2H_2O$ | — | Quarzsand | 0,1 | 900[1h], | +900[1h], | +1000[1h], | +1050[1h] |
| 2 | $Na_2Cr_2O_7 \cdot 2H_2O$ | $Na_2Cr_2O_7 \cdot 2H_2O$ | — | Quarzsand | 0,7 | — | +900[2h], | — | +1050[2h] |
| 3 | $Na_2Cr_2O_7 \cdot 2H_2O$ | $Na_2Cr_2O_7 \cdot 2H_2O$ | — | Kieselsäure | 32 | 850[1h], | +900[1h], | +1000[1h], | +1050[1h] |
| 4 | $Na_2Cr_2O_7 \cdot 2H_2O$ | $Na_2Cr_2O_7 \cdot 2H_2O$ | — | Kieselsäure | 96 | — | +900[2,5h], | — | +1050[1h] |
| 5 | $Na_3Cr_2O_7 \cdot 2H_2O$ | $Na_2Cr_2O_7 \cdot 2H_2O$ | — | Kieselsäure | 140 | 900[1h], | — | 1050[2h], | 1100[1h] |
| 6 | $Na_2Cr_2O_7 \cdot 2H_2O$ | $Na_2Cr_2O_7 \cdot 2H_2O$ | — | Kieselsäure | 385 | — | 950[1h], | 1050[1h], | 1100[1h] |
| 7* | $Na_2Cr_2O_7 \cdot 2H_2O$ | $Na_2Cr_2O_7 \cdot 2H_2O$ | — | Kieselsäure | 440 | 900[1h], | — | — | 1000[1,5] |
| 8 | $Na_2Cr_2O_7 \cdot 2H_2O$ | $Na_2Cr_2O_7 \cdot 2H_2O$ | — | Kieselsäure | 700 | — | 1000[2h], | — | 1150[2h] |
| 9 | $Na_2CO_3$ | $Cr(OH)_3 \cdot xH_2O$ | 215 | Kieselsäure | 95 | — | 1000[2h], | — | 1120[2h] |
| 10 | $Na_2CO_3$ | CrOOH | 305 | Kieselsäure | 440 | — | 1050[2h], | — | 1090[2h] |
| 11 | $Na_2CO_3$ | $Cr_2O_3$ | 3,5–4,5 | Kieselsäure | 440 | 900[1h], | 950[1h], | 1000[1h], | 1100[1h] |
| 12 | $Na_2CO_3$ | $(NH_4)_2CrO_4$ | — | Kieselsäure | 440 | — | 1050[1h], | — | 1090[2h] |
| 13 | Na-Wasserglas | $CrO_3$ | — | Na-Wasserglas + Kieselsäure | (+440) | — | 950[2h], | — | 1050[1h] |
| 14 | NaOH | $Cr_2O_3$ | 3,5–4,5 | Kieselsäure | 95 | 950[1h], | 1000[1h], | 1050[2h], | — |
| 15* | $Na_2CO_3$ | $Cr_2O_3$ | 3,5–4,5 | Kieselsäure | 95 | 900[1h], | — | 1000[1h], | — |

* + 2% NaCl-Mineralisatoren

## Patentansprüche

1. Verfahren zur Herstellung der Kosmochlorverbindung der Zusammensetzung NaCrSi$_2$O$_6$, dadurch gekennzeichnet, dass man, bezogen auf die Formel NaCrSi$_2$O$_6$, stöchiometrische bis nahezu stöchiometrische Mengen solcher Komponenten, die in ihrer Zusammensetzung, gegebenenfalls auch erst beim Erhitzen auf Reaktionstemperatur, die Bruttozusammensetzung NaCrSi$_2$O$_6$ ergeben, gegebenenfalls unter Zusatz von Mineralisatoren vermengt und mindestens 2 mal auf eine Reaktionstemperatur zwischen 850 und 1150°C mit einer intermediären Zerkleinerung aufheizt.

2. Verfahren zur Herstellung von Kosmochlorpigmenten entsprechend Anspruch 1, dadurch gekennzeichnet, dass man auf eine Reaktionstemperatur zwischen 900 und 1100°C und vorzugsweise im letzten Aufheizvorgang auf eine Reaktionstemperatur zwischen 1000 und 1090°C aufheizt.

3. Verfahren nach den Ansprüchen 1 und 2, dadurch gekennzeichnet, dass als Chrom-Komponente Chrom(III)-oxid, basisches Chrom(III)-oxid, Chrom(III)-hydroxid, Chrom(III)-oxihydroxid, Chrom(III)-oxidaquat bzw. deren basische Salze eingesetzt werden.

4. Verfahren nach einem oder mehreren der Ansprüche 1 bis 3, dadurch gekennzeichnet, dass als Chromkomponente Natrium- und/oder Ammoniumchromate und/oder entsprechende Dichromate oder Chrom(IV)-oxid und/oder Chrom(III)- bis Chrom(VI)-oxide eingesetzt werden.

5. Verfahren nach einem oder mehreren der Ansprüche 1 bis 4, dadurch gekennzeichnet, dass als Natriumkomponente Natriumoxid, -hydroxid, -carbonat, -nitrat, -nitrit, -formiat, -acetat, -oxalat, -carboxylate, -silikate, -chromate und Natriumpolychromate eingesetzt werden.

6. Verfahren nach einem oder mehreren der Ansprüche 1 bis 5, dadurch gekennzeichnet, dass als Siliciumkomponente amorphe oder kristalline Kieselsäuren mit einer spezifischen Oberfläche nach BET von 0,01 bis 1000 m²/g und/oder glasig amorphes oder kristallines Natriumsilikat eingesetzt wird.

7. Verwendung der nach einem oder mehreren der Ansprüche 1 bis 6 hergestellten Kosmochlorverbindung der Zusammensetzung NaCrSi$_2$O$_6$ als transparentes oder deckendes anorganisches grünes Pigment.

## Claims

1. Process for the production of the cosmochlorine compound having the composition NaCrSi$_2$O$_6$, characterised in that, based on the formula NaCrSi$_2$O$_6$, stoichiometric to substantially stoichiometric quantities of components, which, in the composition thereof, give the overall composition NaCrSi$_2$O$_6$, optionally only after heating to the reaction temperature, are mixed, if appropriate with the addition of mineralisers, and heated at least twice to a reaction temperature between 850 and 1150°C with intermediate sizereduction.

2. Process for the production of cosmochlorine pigments according to Claim 1, characterised in that the mixture is heated to a reaction temperature between 900 and 1100°C and preferably in the last heating process to a reaction temperature between 1000 and 1090°C.

3. Process according to Claims 1 and 2, characterised in that chromium(III)-oxide, basic chromium(III)-oxide, chromium(III)-hydroxide, chromium(III)-oxyhydroxide, chromium(III)-oxide aquate or their basic salts are used as the chromium component.

4. Process according to one or more of Claims 1 to 3, characterised in that sodium chromates and/or ammonium chromates and/or corresponding dichromates or chromium(IV)-oxide and/or chromium(III)- to chromium(VI)-oxides are used as the chromium component.

5. Process according to one or more of Claims 1 to 4, characterised in that sodium oxide, hydroxide, carbonate, nitrate, nitrite, formate, acetate, oxalate, carboxylates, silicates, chromates and sodium polychromates are used as the sodium component.

6. Process according to one or more of Claims 1 to 5, characterised in that amorphous or crystalline silicic acids having a specific BET surface area of 0.01 to 1000 m²/g and/or glass-like amorphous or crystalline sodium silicate is used as the silicon component.

7. Use of the cosmochlorine compound of the composition NaCrSi$_2$O$_6$ produced according to one or more of Claims 1 to 6 as a transparent or opaque inorganic green pigment.

## Revendications

1. Procédé de préparation du composé cosmochlore de constitution NaCrSi$_2$O$_6$, caractérisé en ce que l'on mélange, éventuellement avec adjonction de minéralisants, des quantités stoechiométriques ou voisines des quantités stoechiométriques, relativement à la formule NaCrSi$_2$O$_6$, de composants qui, par leur constitution, le cas échéant, seulement lors du chauffage à la température de réaction, conduisent à la composition brute NaCrSi$_2$O$_6$, et on les chauffe au moins deux fois à une température de réaction comprise entre 850 et 1150°C, avec un broyage intermédiaire.

2. Procédé de préparation de pigments de cosmochlore selon la revendication 1, caractérisé en ce que l'on chauffe à une température de réaction comprise entre 900 et 1100°C et de préférence, au dernier chauffage, à une température de réaction comprise entre 1000 et 1090°C.

3. Procédé selon les revendications 1 et 2, caractérisé en ce que l'on utilise en tant que composant apportant le chrome de l'oxyde de chrome-III, de l'oxyde basique de chrome-III, de l'hydroxyde de chrome-III, de l'oxyde-hydroxyde de chrome-III, de l'aquate d'oxyde de chrome-III ou leurs sels basiques.

4. Procédé selon une ou plusieurs des revendications 1 à 3, caractérisé en ce que l'on utilise en tant que composant apportant le chrome des chromates de sodium et/ou d'ammonium et/ou les bichromates correspondants ou de l'oxyde de chrome-IV et/ou les oxydes de chrome-III à chrome-VI.

5. Procédé selon une ou plusieurs des revendications 1 à 4, caractérisé en ce que l'on utilise en tant que composant apportant le sodium, l'oxyde, l'hydroxyde, le carbonate, le nitrate, le nitrite, le formiate, l'acétate, l'oxalate, des carboxylates, des silicates, des chromates de sodium et des polychromates de sodium.

6. Procédé selon une ou plusieurs des revendications 1 à 5, caractérisé en ce que l'on utilise en tant que composant apportant le silicium, des silices amorphes ou cristallisées présentant une surface spécifique selon BET de 0,01 à 1000 m²/g et/ou du silicate de sodium vitreux amorphe ou cristallisé.

7. Utilisation du composé cosmochlore de constitution $NaCrSi_2O_6$ préparé selon une ou plusieurs des revendications 1 à 6, comme pigment vert minéral transparent ou couvrant.

# Spekt. Remission von grünen Chrom(Ⅲ)-pigmenten

Fig.